# EUROPEAN PATENT SPECIFICATION

(11) **EP 3 826 515 B1**
(45) Date of publication and mention of the grant of the patent: **06.11.2024**
(21) Application number: 19839808.3
(22) Date of filing: 23.07.2019
(51) Int. Cl.: A47G 29/14, A47G 29/12, B65G 11/06

(54) **DIRECTED DELIVERY SYSTEM**
GERICHTETES ABGABESYSTEM
SYSTÈME DE LIVRAISON DIRIGÉE

(30) Priority: 24.07.2018 AU 2018902673
(43) Date of publication of application: 02.06.2021
(73) Proprietor: Burchat, Clinton Graeme, Idalia, Queensland 4811 (AU)
(72) Inventor: Burchat, Clinton Graeme, Idalia, Queensland 4811 (AU)
(74) Representative: Gallafent, Richard John
(86) International application number: PCT/AU2019/050772
(87) International publication number: WO 2020/019025

(56) References cited:
- WO-A1-2018/000026
- WO-A1-2018/000026
- WO-A1-2018/108227
- GB-A- 2 546 583
- US-A- 1 072 175
- US-A1- 2015 158 599
- US-A1- 2016 257 423
- US-A1- 2018 186 454
- US-A1- 2018 186 454
- US-B1- 9 527 605

## Description

### FIELD OF THE INVENTION

The present invention relates to directed delivery system, and in particular to a directed delivery system for drone delivery of an item to a container at a location.

### BACKGROUND OF THE INVENTION

Throughout the specification and claims the term "drone" is used as a convenient means of denoting an aerial vehicle, such as a UAV or similar. The particular form or kind of drone may be varied. Other forms of delivery may also use the inventive directed delivery system instead. It is envisaged that manned delivery could also be used to drop the items into the directed delivery system. It is not intended that the use of the term "drone" limit the invention in any way, other than as limited in the claims.

Drone delivery is now used and being developed to deliver purchased items in many fields and industries. Amongst these are book delivery, delivery of fast food and clothing items so that a new dress or shirt may be ordered at lunch time, and be delivered in time to wear for a social occasion that evening. These are desirable services for retail and delivery companies, and significant investment is being made into research and development. In some proposed systems, a QUADCOPTER (Trade Mark) or similar small UAV drone may be used at the warehouse to pick the item or be otherwise loaded with the parcel as ordered by a person. The person making the order is typically within the same city and has made the order on-line paying with a credit card. At the time of the purchase the delivery address is confirmed, which is then tallied with a GPS (Global Positioning System- "GPS") location which can be communicated to the drone. A journey is instructed to the drone to go to the logged GPS location. Simple drop delivery, such as to a person below is known, where the drone is sent to an open area where the 10 metre by 10 metre GPS location can be used. A person waits and at the allotted time sees the drone, waits underneath and catches the parcel. Clearly this method is fraught with potential issues, injury to the person, damage to the articles and the general inconvenience of needing to be home in order that the parcel can be delivered. To address this need to be at home to receive a parcel the inventor has developed a sophisticated system for drone delivery subject of a number of patent applications PCT/AU2015/000553 and PCT/AU2017/050651 (published as WO 2018/000026) both in the name of the same inventor.

In addition to the two published specifications noted above, there are further disclosures of systems in other patent specifications enabling an item to be delivered by drone and subsequently removed from an elevated platform to a position where it can be accessed by the desired recipient. US 2016/0257423 discloses a system where an elevator can lower the item once deposited at the top of a delivery post to a lower level whence it can be removed while GB 2546583 discloses a roof mounted system which can deliver packages deposited from a drone into different locations in the building itself.

US 9527605 discloses a system for docking stations, which can be mounted for example on lampposts or cellular telephone towers, and from which a chute may depend down which items deposited at the docking station may travel to a point which is accessible by the desired recipient.

US 2018/018454 discloses a system which includes a drone docking station connected via a one turn spiral ramp or helical slide to a secure mailbox. The system enables more than one item to be built up from successive drone deliveries to the top of the spiral.

None of these systems provides a solution to the problem of delivering individual items to individual destinations each, for example, located in a different apartment in an apartment block, while at the same time enabling both secure delivery to each destination and avoiding potential damage especially to sensitive items such as packaged food or electronics items which cannot simply be dropped down a chute without encountering kinetic shocks.

The closest prior art, which is reflected in the introductory portion of the main claim of this application is US 9527605. The characterising portion of the main claim is directed to the combination of the use of a spiral chute with one or more gates to enable direction of the item coming down the chute to a desired final secured container in which it can rest until accessed by the recipient.

The prior inventions of the inventor looked to address the problem of the person needing to be home to take delivery, but taking delivery to direct to a location, with location means to direct the delivery within the GPS location to a specific receptacle. The various forms of invention enable the drone to communicate with a net, for example, so that the drone aligns and drops the item directly in, to pass to a container. The nets in these forms of invention are at the level of the home of the person, and the receptacle has a short chute to pass the item to a container insider. In some forms of the invention an extendible arm comes out to meet the drone and the drone aligns and delivers into the net. The extendible arm then retracts to bring the item close to the home of the person for retrieval. In some forms a funnel arrangement is used that opens to receive the item from the drone and then closes away when not in use.

There a number of variants to these forms of invention, all with inventive merit in their own right. The present inventions of the inventor each have a delivery receiving equipment for each home, so that the drone delivers to the net or funnel for the home, typically located outside a window. This requires there to be a receptacle at each level, say in a multistorey building some of these may be low to the ground, some at mid-level and some higher. For the person ordering the item it is highly desirable to have the item delivered straight to their home, for retrieval at their convenience, this is for ease and security. However, for the drone delivery it is much easier to deliver to a roof or high location so as not to encounter obstacles and to keep safely away from trees and people who may interfere with the drone. Further the number of delivery locations can be reduced so that in high density locations where there are very numerous apartments, safe an accurate delivery can still be achieved.

The inventor has therefore further developed the invention to receive the item at one location and delivery to another location, such as the home of the person, with a carefully designed conduit between them that enables the item to travel safely between the two. In this way a receptacle on the roof of an apartment building can deliver to however many apartments lie directly below, with the conduit designed for a smooth, low impact delivery to each apartment. The distance between the roof and many apartments in an apartment block is high and so if an item was simply dropped in a funnel the distances and vertical drop would cause certain damage to the item. To overcome this significant problem, the invention uses direction to smoothly and gently deliver the item from the height of the roof to the level of the home, including use of directing pipes and a spiral, as an example, to slow the pace. Gates and doors are used with electronic signalling to open only at the right apartment to deliver the item direct into the intended container where it can be kept secure until retrieval.

The described new invention is a surprising advance over existing system allowing drone delivery to more readily be installed for the whole apartment building, making delivery simpler, and highly efficient. For the user, the item is delivered straight to a container within their home, typically through a wall to a living room or kitchen, so that the item is keep safe and contained until retrieval. Locks are used to prevent unauthorised access where there are multiple occupants of a home. The clever and useful system will be particular applicable for valuable items and electronics where it is essential that there are no impacts during delivery, as expanded upon in the description below.

The following describes a non-limiting example of the invention being used with reference to delivery an item to a multi-story apartment building. The invention is defined by the claims.

It is an object of the present invention to provide a directed delivery system that at least ameliorates one or more of the aforementioned problems of the prior art. It is a further and separate object of the subject invention to provide a method of use of a directed delivery system.

### DISCLOSURE OF THE INVENTION

Accordingly, the present invention provides a directed delivery system, for drone delivery of an item to a location, the directed delivery system including:
a receptacle to receive the item at the location;
a container to receive the delivered item, spaced some distance from the container receptacle in substantially the vertical plane;
a conduit between the receptacle and the containers that directs the item from one to the other , as disclosed in the closest prior art referred to above.

The invention is characterised by the features set out in the characterising portion of the main claim.

In the drone delivery apparatus of the invention the conduit includes a spiral arrangement which directs the movement of the item between the receptacle and the container, and comprises one or more controlled gates to direct the item into the correct container, at the desired delivery point with minimal impact to the item.

The directed delivery system of the invention is defined by claim 1.

Further advantages of the invention are defined in the dependent claims.

Preferably, the directing is the directing of an item from the release by the drone to a position where the item may be retrieved. The direction or directing may include parts of the receptacle. The directing, preferably takes place at least between the receptacle and the container. Preferably, the directing of the item takes place at multiple points between entering the delivery system and the container. Preferably, the directing is from entering the delivery system to direct an item to a particular container there are more than one. Preferably, the directing of the item is to direct the item only to the correct delivery point. Preferably, there are multiple containers and the directing of the item is such that the item is delivered to the correct container. There may be many different forms of direction of the item. The directing may take any suitable form.

Most preferably, the item is directed from release into the delivery system through to arrival at the correct delivery point. Most preferably, the directed delivery system directs the item from release to collection by the person.

Preferably, the delivery system is used with a drone delivery system to delivery to a particular location. The drone delivery may be any suitable drone delivery. The delivery could be replaced with any suitable manual or automated release of an item into the delivery system. The drone may be a QUADCOPTER (Trade Mark). The drone may be controlled on a journey from a first point to a second point, the first point being where the item is loaded and the second point being the delivery location. The location may be determined by the user at the time of the order. The location may be determined by the controller of the drone. Preferably, the delivery by the drone delivers to a GPS defined location. Preferably, the drone delivery includes alignment with the delivery system as defined in the two PCT applications referred to above. Preferably, the receptacle includes location means which communicate with the drone such that the drone can align to release the item within.

The item may be any suitable item. The item may be chosen from the following group: books; clothing items; coffee, tea or similar beverages; drink items; electronics; food items; games items; shoes; sunglasses; toiletries; or any item that may be ordered on-line. The item could also be ordered in person and delivered to the person's home, through use of the invention. For example, order the coffee at the station on the way home to be ready to drink at the person's home on arrival. The item may be contained within or below the drone. The item may be carried in any suitable way by the drone. The item may be suitable packaged before loading on the drone.

The receptacle is preferably adapted to readily receive the item by drone delivery. The receptacle may take any suitable form. The receptacle may be any suitable shape when viewed from above. Preferably, the receptacle is square when viewed from above. Preferably, location means of the receptacle define a shaped viewable by the drone for alignment of the drone and the receptacle. The receptacle may form part of the conduit in other forms of the invention.

Preferably, the receptacle assists in receipt of the item from the drone. Preferably, the receptacle is substantially funnel shaped. The angle of the walls of the funnel may be configured to be suitable for particular kinds of delivery. The angles of the walls of the funnel may form part of the directing. The item is received within the receptacle such that it can be directed and pass through to the next part of the delivery system. Preferably, the receptacle is configured to gently receive the item without undue impact and direct on to the conduit.

Preferably, the receptacle is installed near a roof of a building. Preferably, there is a single receptacle installed to direct delivery to a multiple of delivery points. Preferably a single receptacle may receive items for a number of destinations and the directing at different points between the receptacle and the container determine the container where the item is to be delivered. There may be a receptacle to delivery to each column of apartments in an apartment block. Other suitable combinations may be possible.

The container may take any suitable shape. Preferably, the container is lockable. Any suitable lock may be used. A mobile phone lock may be used. Preferably, the item may only be retrieved from the container on authorised access to the container. The container is preferably located inside a building. Preferably, the container is positioned conveniently at bench height within a home for retrieval. In other forms of the invention the container may be located about a home instead. The delivery point is the point where a person can retrieve the item and preferably, this is a very convenient place.

Preferably, each delivery point includes a container and the direction of the item directs the item from the receptacle to the correct delivery point. Preferably, an angled part between the conduit and container, goes between a substantially vertical plane of the conduit and substantially horizontal plane of the container. Preferably, the angled part

The conduit includes a spiral arrangement which directs the movement of the item.

The spiral arrangement may also slow the decent. Preferably, the spiral is adapted to fit within the conduit from receptacle to the container. There are multiple delivery points and the spiral arrangement can carry the item to these. The spiral arrangement includes one or more gates which on opening allows the item to pass to the container of the correct delivery point. Preferably these gates are controlled wirelessly to open to direct the item to the correct container and delivery point. Preferably, the gate when open prevents the item from passing the entrance to the correct container. Other forms of gate may be included instead. The wall of the gate may be curved. The wall of the gate may include a tapered point.

The conduit may include a wall. The conduit is a route between the receptacle and the container. In some forms of the invention the conduit may have not walls and be a route, passage or framework in which something else travels In one form of the invention the conduit may include mesh or wire walls.

Preferably, the item is delivered in the same orientation as loaded to the drone. Preferably, the item travels the whole way in the same orientation, until retrieval. Preferably, there is no significant impact to the item during use of the delivery system. Most preferably, the delivery system may be useful for delicate items or items that need to be kept upright during delivery.

Preferably, in some forms of the invention the container is an apartment itself, so that the item is delivered into the locked apartment.

Not according to the invention, it is described a further variant of a directed delivery system, for drone delivery of an item, to a location with multiple delivery points, the directed delivery system including:
a receptacle to receive the item at the location;
a delivery point;
a conduit between the receptacle and the containers that directs the item from one to the other minimising the risk of damage during travel,
   wherein the drone delivery of the item to the location is so that the item is received in the receptacle, and directed by the conduit to the desired delivery point with minimal impact.

Not according to the invention, it is described another variant of a directed delivery system, for drone delivery of an item, to a location with multiple delivery points, the directed delivery system including:
a receptacle to receive the item at the location;
a container to receive the delivered item at each delivery point spaced some distance from the container in the vertical plane;
a conduit between the receptacle and the containers that directs the item from one to the other minimising the risk of damage during travel,
wherein the drone delivery of the item to the location is so that the item is received in the receptacle, and directed by the conduit to the container at the desired delivery point with minimal impact.

The delivery system may include any of the features described above.

Accordingly, the invention also provides a method according to claim 10.

### INDUSTRIAL APPLICABILITY

The directed drone delivery system can be manufactured industrially and supplied to the end user, builder or installer for installation in a building. The parts may be supplied in kit form or partially or fully assembled as appropriate.

It will be apparent to a person skilled in the art that changes may be made to the embodiments disclosed herein as long as they fall within the scope of the claims.

### BRIEF DESCRIPTION OF THE DRAWINGS

The invention will now be described in connection with several arrangements for drone delivery of an item to a container in a building, some of which serve as background and do not constitute arrangements in accordance with the invention. The first two embodiments illustrated are not in accordance with the invention.

### In the drawings:

Figure 1 is a front stylised view of a building with 4 different embodiments of the description shown installed for directed drone delivery of an item to a delivery point, with the mechanism of directed delivery shown for each embodiment, and a drone is shown approaching to make the delivery; only the two embodiments on the "right" of the figure are forming part of the claimed invention.
Figure 2 is the front stylised view of the building of Figure 1, as would be seen in use, with the mechanism of the directed delivery of the 4 preferred embodiments covered;
Figure 3 is the stylised view of the building, and 4 embodiments of Figure 1 viewed from below;
Figure 4 is the stylised view of the building, and 4 embodiments of Figure 2 viewed from below;
Figure 5 is a perspective view from below, from one side of the stylised view of the building, and 4 embodiments, of Figure 1 and 3;
Figure 6 is a perspective view from below, from one side of the stylised view of the building, and 4 embodiments, of Figure 2 and 4;
Figure 7 is a perspective view from below, from the other side of the stylised view of the building, and 4 embodiments, of Figure 1, 3 and 5;
Figure 8 is a perspective view from below, from the other side of the stylised view of the building, and 4 embodiments, of Figure 2, 4 and 6;
Figure 9 is a perspective view from above, from one side of the stylised view of the building, and 4 embodiments, of Figure 1, 3, 5 and 7;
Figure 10 is a perspective view from above, from the other side of the stylised view of the building, and 4 embodiments, of Figure 2, 4, 6 and 8;
Figure 11 illustrates a perspective view of the directed delivery system according to a first embodiment not forming part of the invention of Figures 1 to 10, but shown separate to the building and other embodiments;
Figure 12 is the perspective view of the directed delivery system of Figure 11, as shown in Figures 1 to 10;
Figure 13 is a detailed perspective view of embodiments 3 and 4 of Figure 1, just below the receptacles, and the corresponding apartments;
Figure 14 is a detailed perspective view of embodiments 2, 3 and 4 of Figure 1, showing a straight drop part of the conduit;
Figure 15 is a detailed perspective schematic view of part of the conduit of embodiment 3, illustrating the spiral and gate;
Figure 16 is a perspective view from the front of embodiments 1, 2 and 3 of Figures 1 to 10 showing the various delivery point exits for the system;
Figure 17 is a perspective view from the front of embodiments 1, 2 and 3 of Figures 1 to 10 with the drone approaching the first embodiment receptacle for delivery;
Figure 18 is a detailed perspective view of embodiments 1 and 2 of Figure 17; the embodiments 1 and 2 not forming part of the invention;
Figure 19 is a perspective view of inside the apartments of Figures 1 to 10, showing the room of the delivery point and container;
Figure 20 shows a detailed view of the delivery point and container of Figure 19;
Figure 21 shows a perspective view of the spiral mechanism as used in embodiment 3 for the delivery of an item smoothly to the delivery point;
Figure 22 shows the perspective view of Figure 21 from the rear;
Figure 23 is a plan view from above of the spiral mechanism of Figures 21 and 22 illustrating the gate, in an open position allowing the item to pass into the container at the delivery point;
Figure 24 is the plan view from above of Figure 23 with the gate closed, blocking the way to the delivery point and container;
Figure 25 is the plan view from below of Figure 23;
Figure 26 is a detailed view of the spiral mechanism of Figure 21 from behind and with the gates removed to illustrate the hinge;
Figure 27 is a detailed perspective view from above of spiral mechanism of Figure 26;
Figure 28 is a perspective view of the gate of the spiral mechanism of Figure 21; and
Figure 29 is a perspective view of the gate of Figure 28, from behind.

### DETAILED DESCRIPTION OF THE INVENTION INCLUDING A BEST MODE

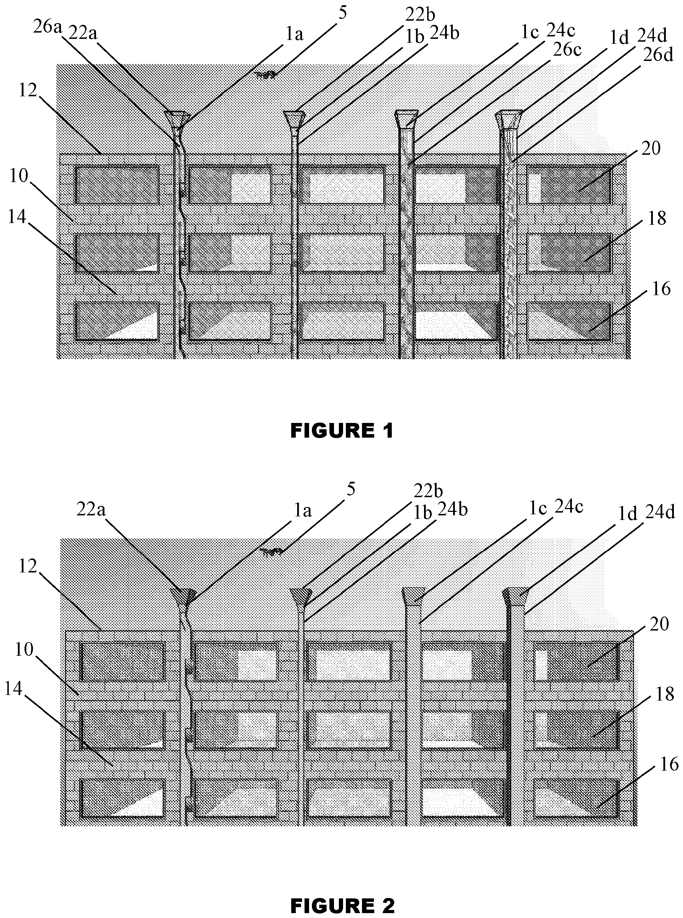

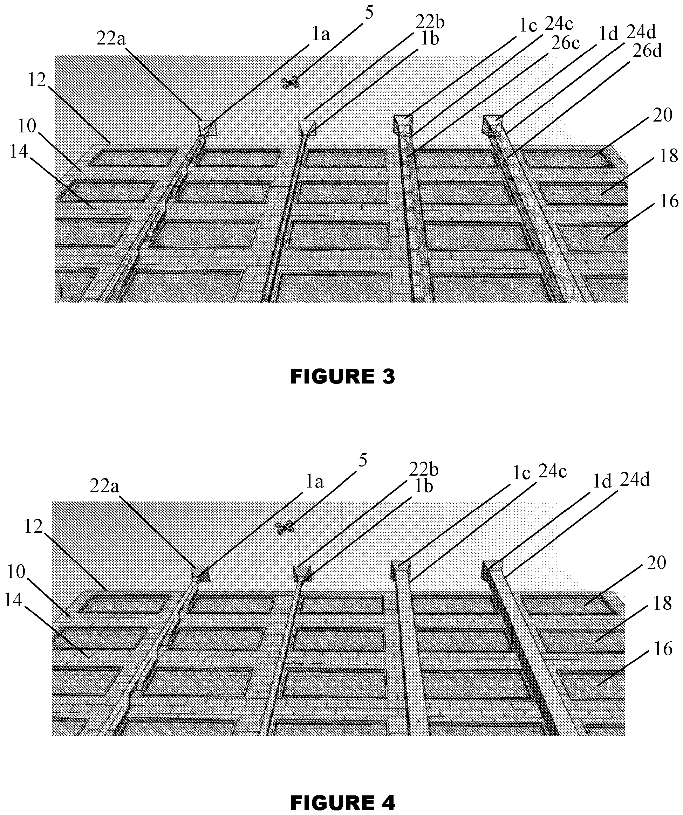

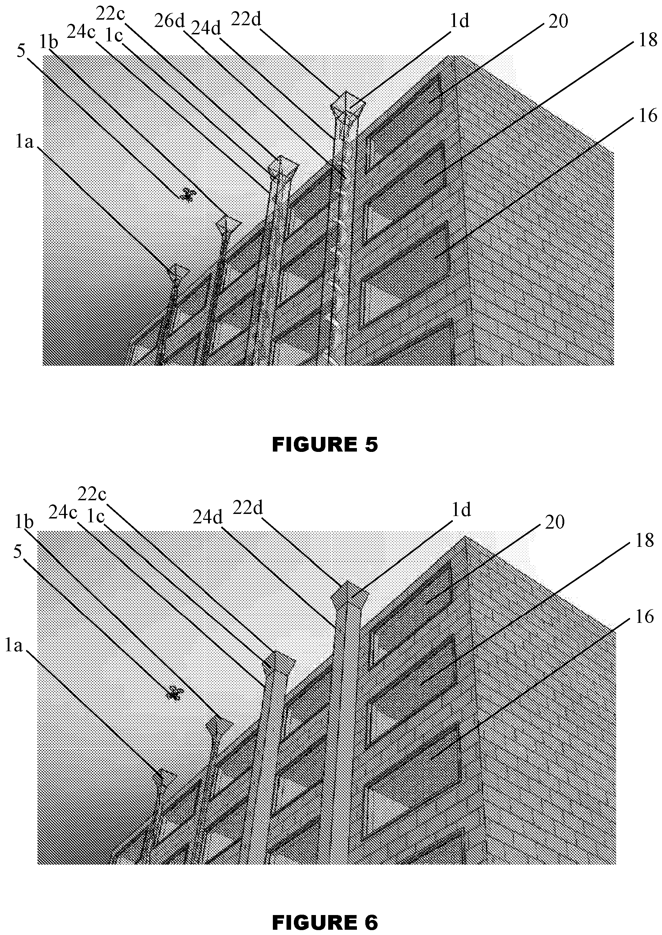

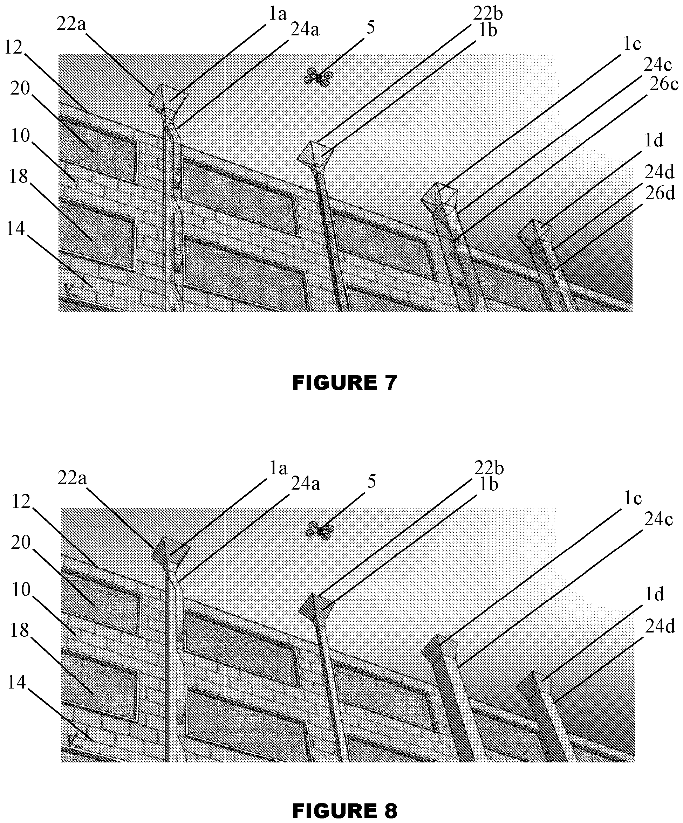

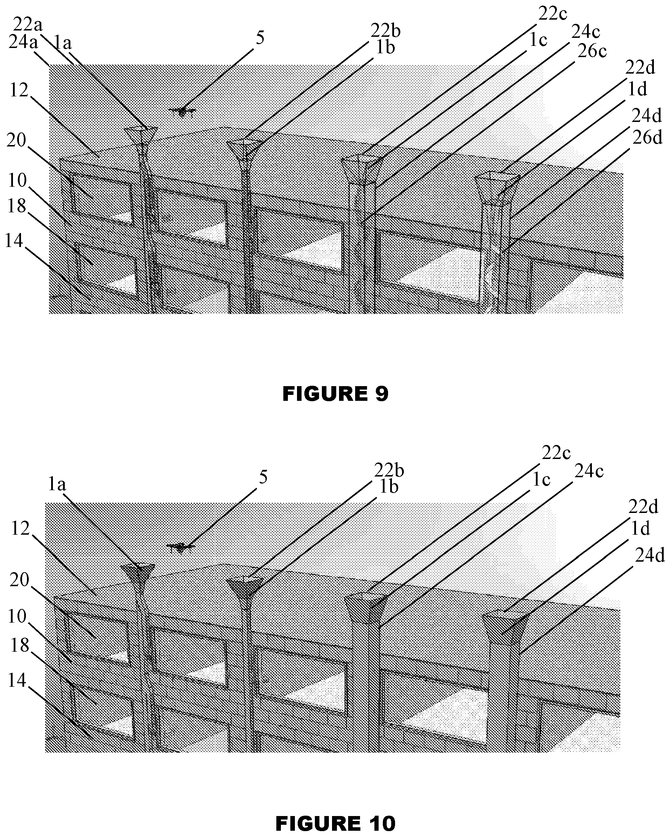

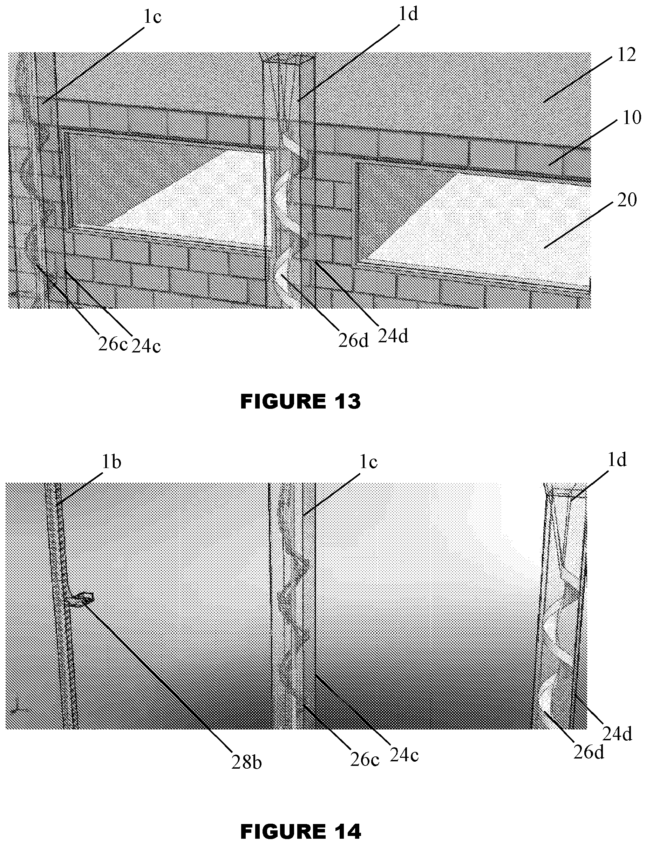

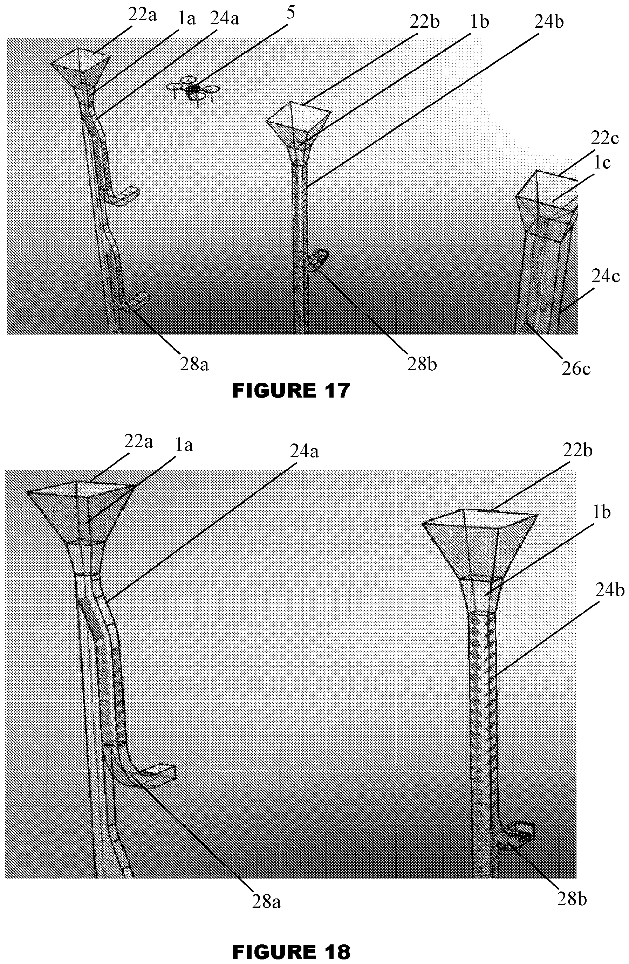

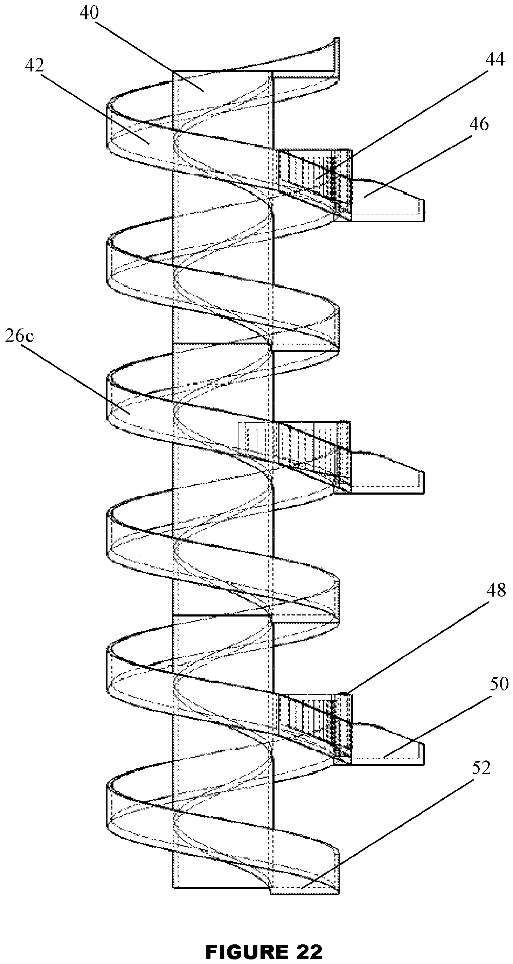

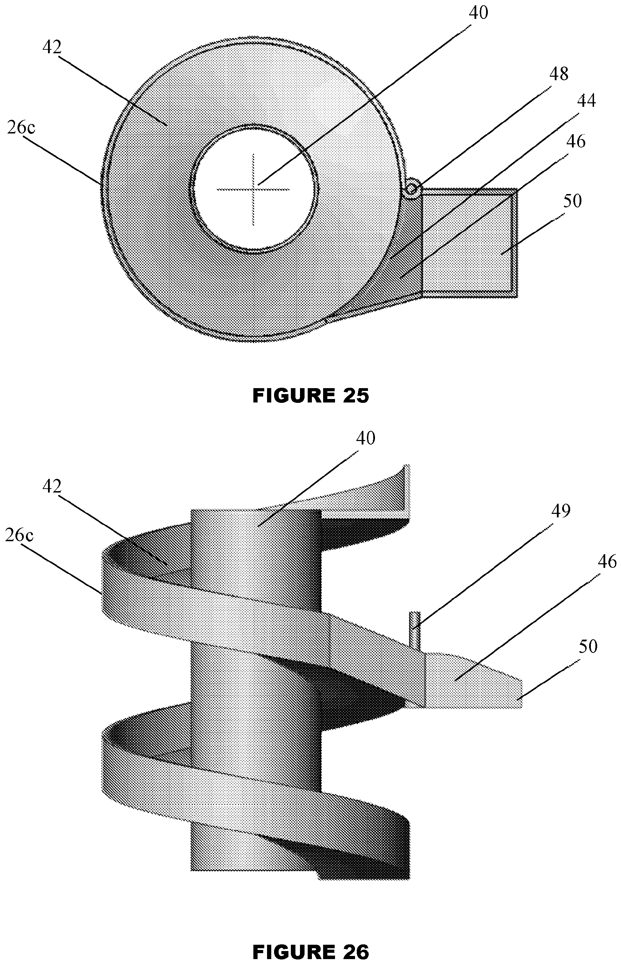

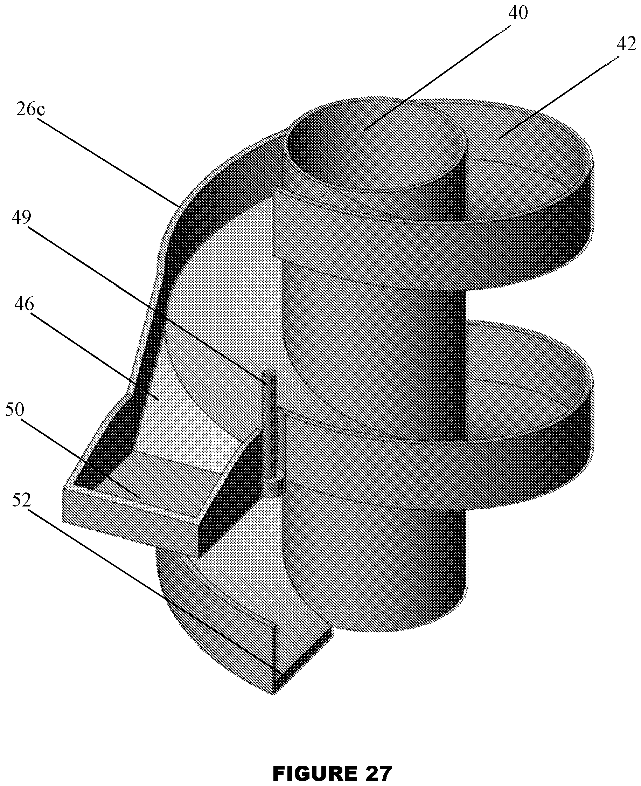

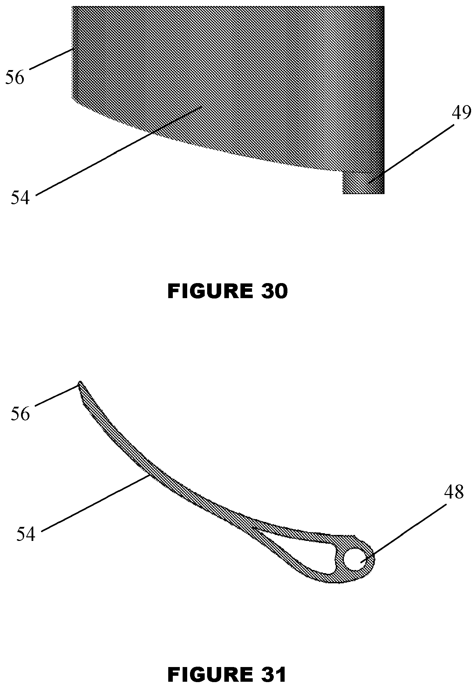

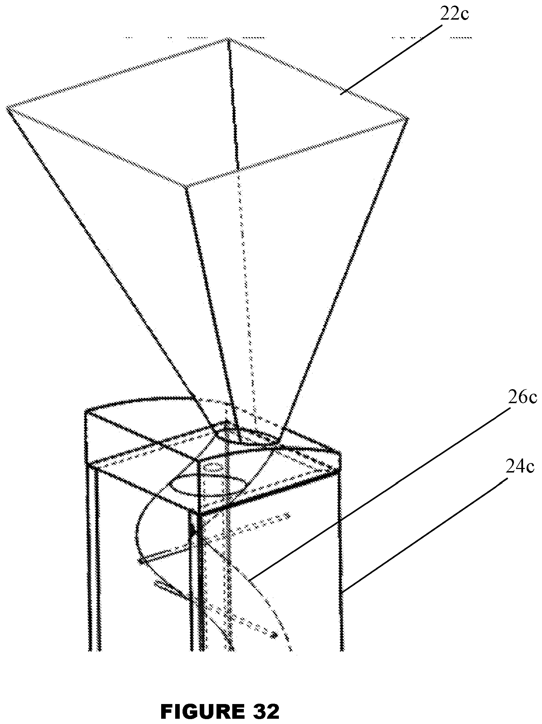

Referring to Figures 1 to 31 (Embodiments 1 to 4 together), different embodiments will be described in 4 variants, where delivery system 1 is shown and the 4 variants are distinguished where the parts are different by inclusion of the letter "a" after the reference numeral, for the first embodiment, "b" for the second embodiment, "c" for the third embodiment and "d" for the fourth embodiment. Delivery system 1a, 1b, 1c and 1d are similar, with differences notable in general terms that 1a, has a chute system to gently direct the item to the correct delivery point, 1b with fingers or brushes to slow descent, and 1c and 1d include the variants on the spiral forms of the invention, with gates which only open to the correct delivery point so that the item smoothly travels to and through the open gate, for delivery. Embodiments 1 and 2 are not forming part of the invention.

Therefore delivery system 1a, 1b, 1c and 1d can be seen illustrated in Figure 1, with drone 5 approaching to make the delivery. Drone 5 is illustrated as a popular QUADCOPTER (Trade Mark), but clearly any suitable delivery vehicle may be used instead. The journey is set by the controlling company from the depot where the item is loaded to the drone, to the location where the delivery is to be made using a GPS location as usual. The journey is set, logged and tracked in the usual manner from the dispatch point, through to the GPS location for the delivery. At this point the control of the drone is assisted by location devices around the edge of the receptacle (refer to the inventive mechanism as described to align with the outline of the receptacle and funnel of PCT/AU2015/000553 and PCT/AU2017/050651 of the inventor) so as to align with the opening. Once the drone is suitably aligned the item that has been carried from the depot to the delivery location can then communicate to release the package, as described in detail in the earlier patent applications. The funnel and alignment mechanism is as described in the earlier patents PCT/AU2015/000553 and PCT/ AU2017/050651.

Building 10 is shown throughout as a multi-level apartment building as a useful example, with roof 12 and front wall 14, with floors 16, 18 and 20 shown illustratively. Floor 16 is shown as the lowest shown floor, with 18 and 20 floors respectively above. The directed drone delivery is particularly useful for multi-residence apartment blocks as a single receptacle on the roof can be delivered to and the package directed to the correct floor and apartment through use of the gates and gate controls as described below. The building could have any number of multiple floors and could in fact be a very high building with 10s or 100s of floors to deliver to, the invention would work the same and work very well in this context.

Each of funnel receptacles 22a, 22b, 22c and 22d of delivery systems 1a, 1b, 1c and 1d can be seen to be located high above roof 12, which is suitable for ready delivery. By having funnels 22a, 22b, 22c and 22d high on the roof this avoids much of the risk of obstruction through trees, poles, people or other buildings. The precise GPS location can be directed through use of the drone control to arrive at the building and then the inventive alignment system used to align with the correct funnel receptacle for delivery to a home below. In the example a single building has 4 different variants installed, but while this is possible it is probable that a single variant will be found most useful and all of the installed delivery systems on a building will be the same.

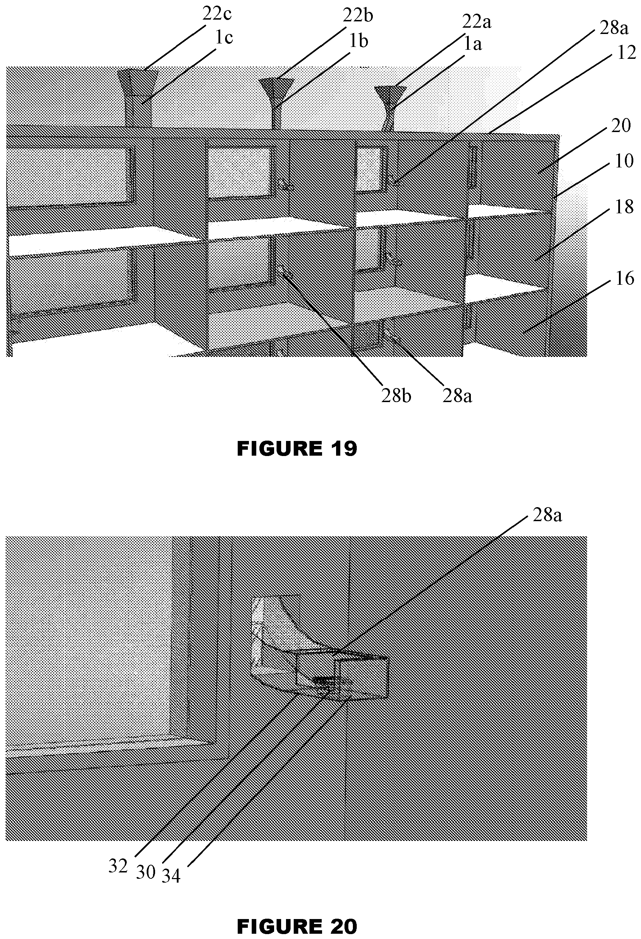

Each funnel receptacle 22a, 22b, 22c and 22d connects with a corresponding conduit 24a, 24b, 24c and 24d, each being configured slightly different to contain the direction mechanisms chutes and spirals 26a, 2bb, 26c and 26d, as described further below, individually, to direct items to delivery chute exit 28 (refer Figure 20).

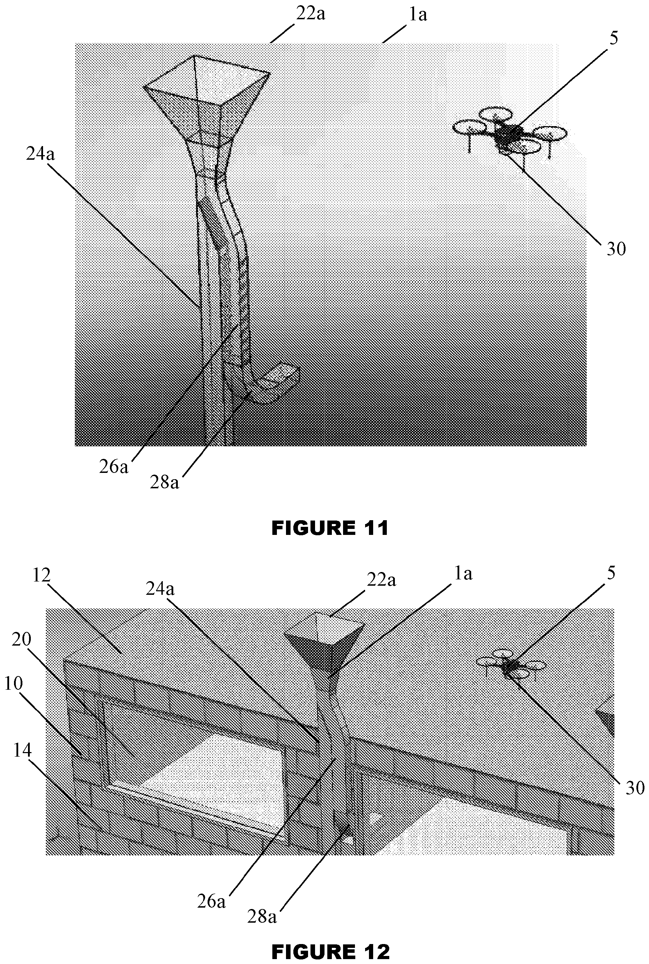

Package 30 is present in the Figures with drone 5, suspended below where it was loaded at the depot. Package 30 is marked illustratively in Figures 11 and 12 and then in Figure 20 showing one form of delivery. Package 30 could be any kind of package but in the illustrated example is a delivery of hot take-away food in a plastic lidded container. Delivery of take away food is a good example of a useful use of the invention as a quick delivery after an on-line order enables drone delivery but the delivery must the carefully made to the correct address and in such a way as to deliver the food safely. The invention enables a smooth impact free delivery, it is intended that the item arrive in a substantially upright manner, to be removed and consumed.

The package could also be a retail item, packaged and ready for use, such as clothing or shoes. The package could contain electronics or valuable items, so the careful delivery with no impact prevents damage to the item. Further the delivery to the locked container described above means that the item is kept safe and secure until the owner can retrieve the item. Use of a mobile phone lock may be useful to ensure the correct owner retrieves the package, but any sort of security may be used.

Each of the embodiments 1a, 1b, 1c and 1d share the common features of drone 5 being instructed from central control to fly to the location, using GPS. Once at the location, location means (not shown) of funnel receptacles 22a, 22b, 22c and 22d assist to align drone 5 to be directly above. Once directly above package 30 can be released and passes into funnel gently, as the drone is very close, and smoothly slides on the angled sides into conduit 24a, 24b, 24c and 24d and into delivery chutes and spirals 26a, 26b, 26c and 26d. Each delivery system 26a, 26b, 26c and 26d is separately described below but each carefully delivers package 30 down to the appropriate level of the delivery point, where package 30 should ultimately end up, at delivery chute exit 28a, 28b, 28c (28d not shown). Delivery chute exit 28 includes container 32 with lockable door 34.

Delivery chute exit 28a, 28b, 28c (not shown for embodiment 4) can take many different forms but as illustrated (refer in particular to Figures 19 and 20) is the same for all 4 embodiments. A hole is made in wall 14 during installation of delivery system 1a, 1b, 1c or 1d such that a convenient delivery point is created for retrieval of the ordered item. Conduit 24a, 24b, 24c and 24d all go from vertical to horizontal before becoming horizontal container 32. Horizontal container 32 is convenient to retrieve the item being positioned at a height similar to the height of a window so retrieval can be made without the need to bend down or reach up unduly. Conventional locks with a physical or electronic key can be for lockable door 34 in the usual manner. Use of a safe, locked container 32 is particular useful to keep the item secure until the authorised user is home, and enables remote ordering and delivery without the person being home. Otherwise, the home itself can be the secure container as once delivered into a home only the authorised occupants with a key will be able to access the package.

The level surface of container 32 will keep package 30 and the contents upright. Where package 30 contains take away food this may be ordered on the train home and be there, ready to be taken out and eaten when the person gets home. Take away food can be messy and is generally well packaged but dues need to be kept upright to prevent spillage. The clever system allows for this and the package, which may be a plastic container with a lid remains, as if on a counter top, ready for collection. Similarly, where the item is a delicate electronics item, the item is quickly and smoothly delivered to the final deliver point and then kept on a level surface in the same orientation and loaded at the depot-a key advantage to the invention.

In each of the 4 embodiments the item is delivered carefully, and can be retrieved from within the home of the person at their convenience an advance on the prior art.

The description will now continue to describe the different delivery systems for each of four systems of which only embodiments 3 and 4 are in accordance with the present invention. Referring to Figures 1 to 12, and 16 to 20 (Embodiment 1 not forming part of the invention), this embodiment of the delivery system, delivery system 1a, with delivery chute 26a will be described, where narrow funnel 22a is shown suitable for receipt of items. The first embodiment will let the package fall until at the level of the desired apartment where the package will be directed horizontally (by the gate as shown in Fig 11) then slowed with the fingers/brushes in the parallel chute. A further and final chute system like 26a on the ground floor will be adapted to slow the item for the lowest level.

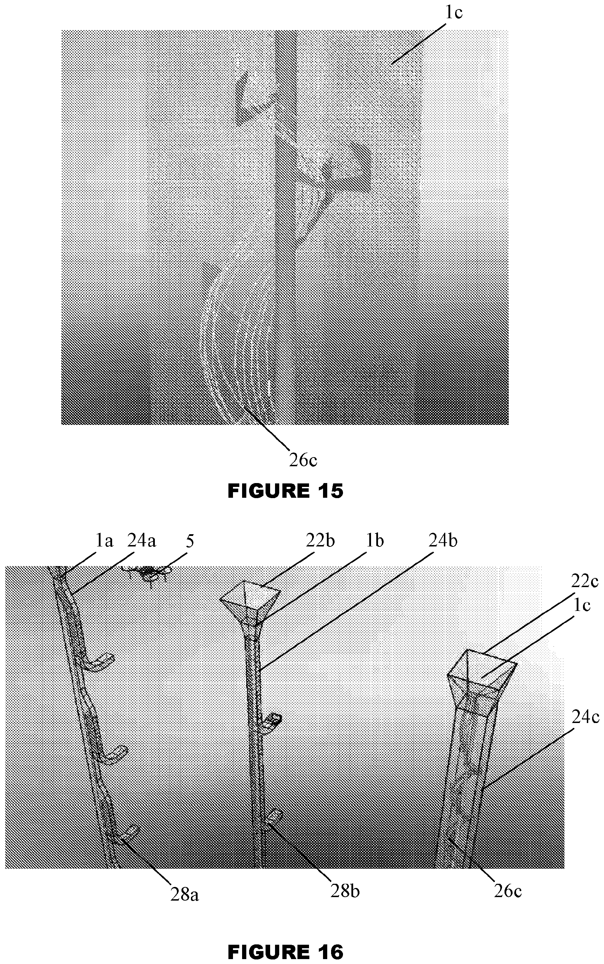

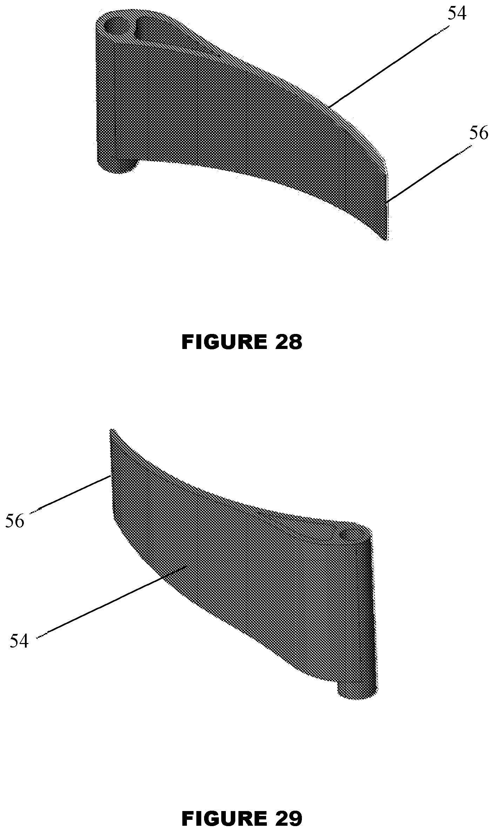

The third is a spiral chute (Fig 15) where the surface that the package sits on, as it makes its way down the spiral, is made up of wires or tubes. This removes a lot of surface friction that the package has to overcome to descend so the spiral can be tighter and less steep. The gates to direct the package horizontally are the same as Fig 28 - 31. This design also lets rainwater fall through the spiral effortlessly. This will most likely be the design we end up building.

The fourth is a solid version of the third design where the surface that the package descends upon is solid.

Narrow funnel 22a can receive most sized items but may be particularly suitable to small electronics items, clothing or delivered food containers. Narrow funnel 22a takes receipt of package 30 from drone 5, and the package gently passes from the walls to conduit 24a which is gently sloped towards deliver chute 26a. The mechanism could also include the spiral mechanism described for the later embodiments in combination.

Figures 11 and 12, and 16 to 20 illustrate delivery system 1a, with drone 5 approaching, ready to deliver to delivery chute 26a. After alignment of drone 5 with funnel 22a, as described elsewhere, package 30 is released down conduit 24a and to delivery chute 26a to delivery chute exit 28a, as shown at floor 20 of building 10. The package, whatever it may contain, is directed by conduit 24a and the internal fingers so that the journey of the item is controlled to gently slow after release to arrive at the horizontal delivery chute exit 28a. The number and size of these fingers can be adapted to suit the needs of the user, size of the item and the height of the drop.

There is a repeat of the part shown labelled 26a, for each delivery point connected to conduit 24a, a key advantage of one form of the invention to deliver to many homes from a single release point. Drone 5 has been aligned with the correct funnel for release, before there is further communication to open the gate to allow package 30 only to travel to the correct delivery point and delivery chute exit 28a. The locked container of exit 28a can be accessed through use of a mobile phone lock to enable package 30 to be removed and the container relocked. All other gates are closed so that once package 30 is released it is directed through the communicated controls.

The clever direction of the item to the specific delivery point for retrieval, the home of the customer is an advance in the art, which is likely to prove very popular with suppliers and customers. There are many practical advantages to avoiding obstacles and minimising infrastructure, as well as the very great convenience to the consumer that the item is ready to simply remove from the locked container when they are ready to do so. The item is on a level surface and sitting as if on a bench top, perfectly presented. The item can remain safe and secure in the container indefinitely until authorised access occurs.

Referring to Figures 1 to 10, and 14, 16 to 19 (Embodiment 2 not forming part of the invention), in this embodiment of a delivery system, delivery system 1b is illustrated which is very similar to delivery system 1a The second embodiment is very similar to the first however the package is slowed by the fingers/brushes as soon as it enters the main chute then moved horizontally (like the first chute) into a much shorter parallel chute (without fingers) at the desired level.

Again, drone 5 delivers to delivery chute 26b after alignment to release the package into funnel 22b, as described elsewhere. Funnel 22b is the smallest illustrated funnel as may be particular useful for small packages. The opening of funnel 22b is the same as the others but the sides are of a greater angle than funnel 22a for example.

Once package 30 is released down conduit 24b the package passes slowly to deliver the item to delivery chute 26b and delivery chute exit 28b (refer Figure 16). There are chutes for each delivery point and controls of drone 5 enable gates (not shown) to be opened or kept closed so that package 30 can only be directed to the correct delivery chute exit 28b. As described for delivery system 1a delivery chute exit 28b is configured to be horizontal, a locked container for easy retrieval by the person.

Referring to Referring to Figures 1 to 10, and 13 to 17, 19 and 21 to 31 (Embodiment 3), this shows a preferred embodiment of the delivery system according to the invention showing a spiral directing the item from release to delivery point. Delivery system 1c is similar to the first 2 described embodiments, with funnel 22c leading to conduit 24c through to delivery chute exit. Funnel 22c is sized to have the same size opening as the other 3 but the opening between funnel 22c and conduit 24c is wider to allow larger sized parcels to be delivered. Conduit 24c is wider all the way down as can be seen in particular in Figures 1 and 2. The method of use is the same for these parts as described elsewhere and delivery chute exit is as described for the first two embodiments.

Different to the first two embodiments, delivery spiral 26c replaces delivery chute 26a and 26b, and it is through sliding down the spiral. Use of the spiral is particularly useful to smoothly slide the item in the correct orientation from a high position to a low position without impact or risk of damage. Even a significant height between the point of release and the delivery point can, in this way be traversed without damage. Post 40 runs centrally and it is around this that the spiral runs, in channel 42. Channel 42 is sized to receive the goods and direct them properly to the exit.

Cleverly, each delivery point and delivery chute exit (not shown) can have an item pass by to a lower level if gate 44 is closed. There are multiple gates, one each for each exit, so several gates 44 may be passed before an open gate is encountered. Gate 44 of the delivery point is communicated to by drone or through mobile networks to open on approach of drone 5, so only the correct gate opens.

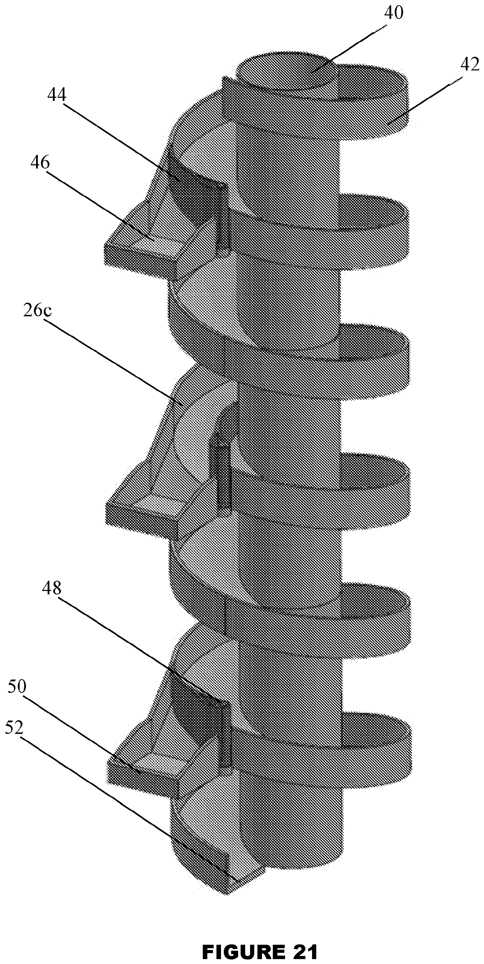

As can be seen in particular in Figure 21 when open gate 44 bars the way for the item to travel any other way than to the delivery exit. Each gate 44 is hinged between an open and closed position about gate hinge 48, with gate post 49. Delivery exits 46, with stop 50 (break 52 showing where the channel continues) are indicated generally leading to the arrangement as described for delivery chute exits 28a and b, not shown.

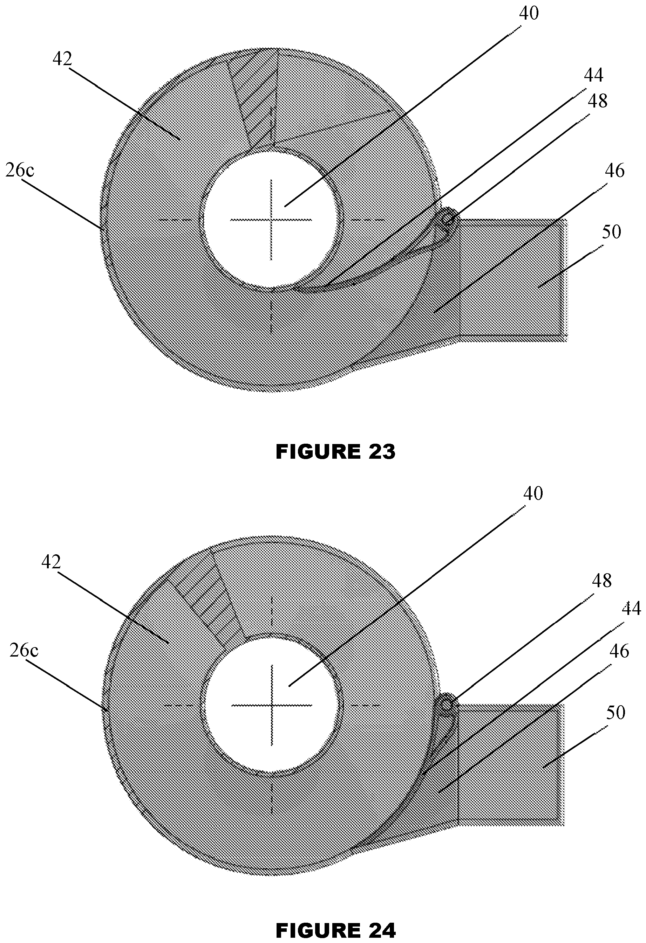

With reference to Figures 23 and 24 curved gate wall 54 can be seen to be especially designed to smoothly deflect items passing by without damage. Each gate 44 also has wall 54 with a tapered end, to lightly position between the open and closed position.

Referring to Figures 1 to 10, and 13 and 14, (Embodiment 4), also a preferred embodiment of the delivery system according to the present invention, delivery system 1d with funnel 22d, leading to wider conduit 24d is shown. Again larger parcels can be received in these configurations. The delivery is as described for embodiment 3, except that the spiral 26d is slightly different. In all other aspects the mechanism is the same.

The funnel of each of the embodiments appears different sizes as convenient for illustration but the size can be varied or may be the same. Preferably, the size of funnel for each is suitable to receive the packages to be delivered.

For any of the embodiments these may be installed when the building is constructed or may be retrofitted later. In one form of the invention the apparatus may be provided in modular form. The parts may be 3D printed as blocks. The blocks contain 1 revolution or half a revolution and be able to clip them together with reciprocating parts, to build down the entire height of the building. Each module would contain a means of passing electricity to operate the gates. This would also aid in maintenance as we could remove a malfunctioning module and easily replace it with a working module. It is even envisaged that the "package" may be sent to another person or firm with the 3D print and other instructions to install locally, and this could be sent from overseas, but the product made at the location for installation.

Clearly, the sophisticated system enables safe and gentle delivery of items to a secure location, suitable for personal retrieval at a later date.

A further form not forming part of the invention is also under development that uses an elevator type mechanism that on receipt of the item takes communication from the drone to deliver to a particular delivery point and at that point tip the floor of the elevator to tip the item into the waiting container. Evidently, there is a very useful invention described and disclosed herein with different uses for different industries. The careful, automated handling of the item during the final stages of delivery will make a significant differences to the industry and allow consumer trust to be built in suppliers and delivery agencies who use the invention.

Overall, the inventor has developed a significant advance in drone delivery and directing of goods to the intended recipient.

### REFERENCE SIGNS LIST:

| | | | | | |
|---|---|---|---|---|---|
| **1a** | Delivery System | **24d** | Conduit | **40** | Post |
| **1b** | Delivery System | **26a** | Delivery chute | **42** | Channel |
| **1c** | Delivery System | **26b** | Delivery chute | **44** | Gate |
| **1d** | Delivery System | **26c** | Delivery spiral | **46** | Delivery exits |
| **5** | Drone | **26d** | Delivery spiral | **48** | Gate hinge |
| **10** | Building | **28a** | Delivery chute exit | **49** | Post of hinge |
| **12** | Roof | **28b** | Delivery chute exit | **50** | Stop/end |
| **14** | Front wall | | | **52** | Break |
| **16** | Floors of 10 | | | | |
| **18** | Floors of 10 | **30** | Package | | |
| **20** | Floors of 10 | **32** | Container | | |
| **22a** | Funnels | **34** | Door | | |
| **22b** | Funnels | **36** | | | |
| **22c** | Funnels | | | **54** | Curved gate wall |
| **22d** | Funnels | | | **56** | Tapered end |
| **24a** | Conduit | | | | |
| **24b** | Conduit | | | | |
| **24c** | Conduit | | | | |

## Claims

1. A directed delivery apparatus (1a, 1b, 1c, 1d), for drone (5) delivery of an item (30) to a location, the apparatus including:
a receptacle ( 22c, 22d) to receive the item (30) at the location,
a plurality of location means about the perimeter of the receptacle (22c, 22d) to specifically define where the item (30) is to be placed, the location means being able to communicate with the drone (5) such that the drone (5) can align to the correct receptacle (22c, 22d) within the GPS location before release of the item (30) within;
a plurality of securable containers (32) to receive the delivered item (30), spaced some distance from the receptacle (22c, 22d), in substantially the vertical plane; and
a conduit (24a, 24b, 24c, 24d) between the receptacle (22c, 22d) and the containers (32) to direct the item (30) from the receptacle (22c, 22d) to one securable container (32) of the plurality of securable containers (32) minimising the risk of damage during travel and
**characterised in that**
the conduit (24c, 24d) includes a spiral arrangement (26c, 26d) which directs the movement of the item (30) between the receptacle (22c, 22d) and the securable containers (32), and **in that** the securable containers (32) are spaced from each other vertically along the spiral arrangement and **in that** the spiral arrangement comprises one or more controlled gates (44), controlled in response to the delivery of the item (30) by the drone (5) to direct the item (30) into the correct securable container (32).

2. A directed delivery apparatus (1a, 1b, 1c, 1d) according to claim 1, **characterised in that** the movement of the item (30) between the item (30) entering the delivery system (1a, 1b, 1c, 1d) and the container (32), where the item (30) may be retrieved takes place at multiple points.

3. A directed delivery apparatus (1a, 1b, 1c, 1d) according to claim 1 or 2 **characterised in that** the receptacle (22a, 22b, 22c, 22d) is substantially funnel shaped, and the shaping also directs the item (30).

4. A directed delivery apparatus (1a, 1b, 1c, 1d) according to any one of claims 1 to 3, **characterised in that** the securable container (32) is lockable.

5. A directed delivery apparatus (1a, 1b, 1c, 1d) according to any one of claims 1 to 4 **characterised in that** the securable container (32) is located inside a building (10) where a person can retrieve the item (30) and is at a very convenient place and or height for retrieval.

6. A directed delivery apparatus (1a, 1b, 1c, 1d) according to any one of claims 1 to 5, **characterised in that** the gates (44) are controlled wirelessly to open to direct the item (30) to the correct container (32) and delivery point.

7. A directed delivery apparatus (1a, 1b, 1c, 1d) according to any one of claims 1 to 6, **characterised in that** the gate (44), when open, prevents the item (30) from passing the entrance to the correct container (32).

8. A directed delivery apparatus (1a, 1b, 1c, 1d) according to any one of claims 1 to 7, **characterised in that** the conduit (24a, 24b, 24c, 24d) includes a wall, which may be solid, mesh or wire.

9. A directed delivery apparatus (1a, 1b, 1c, 1d) according to any one of claims 1 to 8, **characterised in that** the container (32) is an apartment itself, so that the item (30) is delivered into the locked apartment.

10. A method of directed drone delivery, to a directed delivery apparatus (1a, 1b, 1c, 1d) according to any one of the preceding claims including the following steps:
a) receiving an item (30) in a receptacle (22a, 22b, 22c, 22d);
b) directing the item (30) via the conduit (24a, 24b, 24c, 24d) in a controlled manner; and
c) containing the item (30) at the delivery point, ready for retrieval by the user, if authorised to do so.

## Revendications

1. Appareil de livraison dirigée (1a, 1b, 1c, 1d), pour la livraison par drone (5) d'un article (30) à un emplacement, l'appareil incluant :
un réceptacle (22c, 22d) pour recevoir l'article (30) au niveau de l'emplacement,
une pluralité de moyens de localisation autour du périmètre du réceptacle (22c, 22d) pour définir spécifiquement l'endroit où l'article (30) doit être placé, les moyens de localisation étant capables de communiquer avec le drone (5) de sorte que le drone (5) puisse s'aligner sur le bon réceptacle (22c, 22d) au sein de l'emplacement GPS avant de libérer l'article (30) au sein de celui-ci ;
une pluralité de contenants sécurisables (32) destinés à recevoir l'article délivré (30), espacés d'une certaine distance du réceptacle (22c, 22d), sensiblement dans le plan vertical ; et
un conduit (24a, 24b, 24c, 24d) entre le réceptacle (22c, 22d) et les contenants (32) pour diriger l'article (30) du réceptacle (22c, 22d) vers un contenant sécurisable (32) de la pluralité de contenants sécurisables (32), en minimisant le risque de dommages pendant le voyage et
**caractérisé en ce que**
le conduit (24c, 24d) inclut un agencement en spirale (26c, 26d) qui dirige le mouvement de l'article (30) entre le réceptacle (22c, 22d) et les contenants sécurisables (32), et **en ce que** les contenants sécurisables (32) sont espacés les uns des autres verticalement le long de l'agencement en spirale et **en ce que** l'agencement en spirale comprend une ou plusieurs portes commandées (44), commandées en réponse à la livraison de l'article (30) par le drone (5) pour diriger l'article (30) dans le bon contenant sécurisable (32).

2. Dispositif de livraison dirigée (1a, 1b, 1c, 1d) selon la revendication 1, **caractérisé en ce que** le mouvement de l'article (30) entre l'entrée de l'article (30) dans le système de livraison (1a, 1b, 1c, 1d) et le contenant (32), où l'article (30) peut être récupéré, a lieu en de multiples points.

3. Appareil de livraison dirigée (1a, 1b, 1c, 1d) selon la revendication 1 ou 2, **caractérisé en ce que** le réceptacle (22a, 22b, 22c, 22d) est sensiblement en forme d'entonnoir, et la mise en forme dirige également l'article (30).

4. Appareil de livraison dirigée (1a, 1b, 1c, 1d) selon l'une quelconque des revendications 1 à 3, **caractérisé en ce que** le contenant sécurisable (32) est verrouillable.

5. Appareil de livraison dirigée (1a, 1b, 1c, 1d) selon l'une quelconque des revendications 1 à 4, **caractérisé en ce que** le contenant sécurisable (32) est situé à l'intérieur d'un bâtiment (10) où une personne peut récupérer l'article (30) et se trouve à un endroit et/ou à une hauteur très pratiques pour la récupération.

6. Appareil de livraison dirigée (1a, 1b, 1c, 1d) selon l'une quelconque des revendications 1 à 5, **caractérisé en ce que** les portes (44) sont commandées sans fil pour s'ouvrir afin de diriger l'article (30) vers le bon contenant (32) et le bon point de livraison.

7. Appareil de livraison dirigée (1a, 1b, 1c, 1d) selon l'une quelconque des revendications 1 à 6, **caractérisé en ce que** la porte (44), lorsqu'elle est ouverte, empêche l'article (30) de passer l'entrée du bon contenant (32).

8. Appareil de livraison dirigée (1a, 1b, 1c, 1d) selon l'une quelconque des revendications 1 à 7, **caractérisé en ce que** le conduit (24a, 24b, 24c, 24d) inclut une paroi, qui peut être pleine, en maille ou en fil.

9. Appareil de livraison dirigée (1a, 1b, 1c, 1d) selon l'une quelconque des revendications 1 à 8, **caractérisé en ce que** le contenant (32) est un appartement lui-même, de sorte que l'article (30) est délivré dans l'appartement verrouillé.

10. Procédé de livraison dirigée par drone, à un appareil de livraison dirigée (1a, 1b, 1c, 1d) selon l'une quelconque des revendications précédentes, incluant les étapes suivantes :
a) la réception d'un article (30) dans un réceptacle (22a, 22b, 22c, 22d) ;
b) le fait de diriger l'article (30) via le conduit (24a, 24b, 24c, 24d) de manière commandée ; et
c) la conservation de l'article (30) au point de livraison, prêt à être récupéré par l'utilisateur, s'il y est autorisé.

## Patentansprüche

1. Lieferleitvorrichtung (1a, 1b, 1c, 1d) für die Lieferung eines Artikels (30) durch eine Drohne (5) an einen Ort, wobei die Vorrichtung umfasst:
ein Aufnahmebehältnis (22c, 22d) zum Aufnehmen des Artikels (30) an dem Ort,
eine Vielzahl von Ortungsmitteln um den Umfang des Aufnahmebehältnisses (22c, 22d) herum, um genau festzulegen, wo der Artikel (30) angeordnet werden soll, wobei die Ortungsmittel in der Lage sind, mit der Drohne (5) zu kommunizieren, so dass sich die Drohne (5) auf das richtige Aufnahmebehältnis (22c, 22d) innerhalb des GPS-Standorts ausrichten kann, bevor sie den Artikel (30) in diesem abgibt;
eine Vielzahl von verschließbaren Behältern (32) zum Aufnehmen des gelieferten Artikels (30), die in einem gewissen Abstand vom Aufnahmebehältnis (22c, 22d) in im Wesentlichen der vertikalen Ebene angeordnet sind; und
eine Leitung (24a, 24b, 24c, 24d) zwischen dem Aufnahmebehältnis (22c, 22d) und den Behältern (32), um den Artikel (30) von dem Aufnahmebehältnis (22c, 22d) zu einem verschließbaren Behälter (32) der Vielzahl von verschließbaren Behältern (32) zu leiten, wodurch das Risiko einer Beschädigung während der Beförderung minimiert wird, und
**dadurch gekennzeichnet,**
**dass** die Leitung (24c, 24d) eine Spiralanordnung (26c, 26d) umfasst, die die Bewegung des Artikels (30) zwischen dem Aufnahmebehältnis (22c, 22d) und den verschließbaren Behältern (32) leitet, und dass die verschließbaren Behälter (32) vertikal entlang der Spiralanordnung voneinander beabstandet sind, und dass die Spiralanordnung ein oder mehrere gesteuerte Tore (44) umfasst, die als Reaktion auf die Lieferung des Artikels (30) durch die Drohne (5) gesteuert werden, um den Artikel (30) in den richtigen verschließbaren Behälter (32) zu leiten.

2. Lieferleitvorrichtung (1a, 1b, 1c, 1d) nach Anspruch 1, **dadurch gekennzeichnet, dass** die Bewegung des Artikels (30) zwischen dem Artikel (30, welcher in das Lieferleitsystem (1a, 1b, 1c, 1d) eintritt, und dem Behälter (32), aus dem der Artikel (30) entnommen werden kann, an mehreren Punkten erfolgt.

3. Lieferleitvorrichtung (1a, 1b, 1c, 1d) nach Anspruch 1 oder 2, **dadurch gekennzeichnet, dass** der Behälter (22a, 22b, 22c, 22d) im Wesentlichen trichterförmig ist und dass die Formgebung den Artikel (30) auch leitet.

4. Lieferleitvorrichtung (1a, 1b, 1c, 1d) nach einem der Ansprüche 1 bis 3, **dadurch gekennzeichnet, dass** der verschließbare Behälter (32) absperrbar ist.

5. Lieferleitvorrichtung (1a, 1b, 1c, 1d) nach einem der Ansprüche 1 bis 4, **dadurch gekennzeichnet, dass** sich der verschließbare Behälter (32) innerhalb eines Gebäudes (10) befindet, wo eine Person den Artikel (30) abholen kann, und dass sich dieser an einem sehr bequemen Ort und/oder in einer für die Abholung geeigneten Höhe befindet.

6. Lieferleitvorrichtung (1a, 1b, 1c, 1d) nach einem der Ansprüche 1 bis 5, **dadurch gekennzeichnet, dass** die Tore (44) drahtlos gesteuert werden, um sich zu öffnen und den Artikel (30) zum richtigen Behälter (32) und Zustellungsort zu leiten.

7. Lieferleitvorrichtung (1a, 1b, 1c, 1d) nach einem der Ansprüche 1 bis 6, **dadurch gekennzeichnet, dass** das Tor (44), wenn es offen ist, den Artikel (30) daran hindert, den Eingang zum richtigen Behälter (32) zu passieren.

8. Lieferleitvorrichtung (1a, 1b, 1c, 1d) nach einem der Ansprüche 1 bis 7, **dadurch gekennzeichnet, dass** die Leitung (24a, 24b, 24c, 24d) eine Wand umfasst, die massiv, aus Maschendraht oder Draht sein kann.

9. Lieferleitvorrichtung (1a, 1b, 1c, 1d) nach einem der Ansprüche 1 bis 8, **dadurch gekennzeichnet, dass** der Behälter (32) selbst eine Wohnung ist, so dass der Artikel (30) in die verschlossene Wohnung geliefert wird.

10. Verfahren zur gezielten Drohnenlieferung an eine Lieferleitvorrichtung (1a, 1b, 1c, 1d) nach einem der vorhergehenden Ansprüche, umfassend die folgenden Schritte:
a) Empfangen eines Artikels (30) in einem Aufnahmebehältniss (22a, 22b, 22c, 22d);
b) Leiten des Artikels (30) über die Leitung (24a, 24b, 24c, 24d) auf kontrollierte Weise; und
c) Aufbewahren des Artikels (30) am Lieferpunkt, bereit zur Abholung durch den Benutzer, sofern dieser dazu berechtigt ist.
